# EUROPEAN PATENT APPLICATION

(11) **EP 1 481 885 A2**
(43) Date of publication of application: **01.12.2004**
(21) Application number: 04076524.0
(22) Date of filing: 24.05.2004
(51) Int. Cl.: B62K 25/28

(54) **Attachment structure between driving-wheel and engine, in particular for motor vehicles**

(30) Priority: 27.05.2003 IT MI20031058
(71) Applicant: PIAGGIO & C. S.p.A., 56025 Pontedera (Pisa) (IT)
(72) Inventor: Marcacci, Maurizio, 57128 Livorno (IT)
(74) Representative: De Gregori, Antonella

(57) **Abstract**

The invention concerns an attachment structure between driving-wheel (10) and engine, in particular for motor vehicles, in which the connection between engine and wheel is obtained through two independent connection elements (4,5), a first end of which is hinged on rotation axes (6,7) distinct from each other and parallel, situated in distinct points of the engine, and a second end of which is hinged on distinct and parallel rotation axes (8,9), situated at distinct points of the support structure of the driving-wheel (10).

## Description

The present invention concerns an attachment structure between driving-wheel and engine, in particular for motor vehicles.

More specifically, the invention refers to an attachment structure to the engine of the structure that supports the driving-wheel, which in the case of motor vehicles is the rear wheel.

Currently, attachment systems between engine, considered fixed with respect to the frame, and driving-wheel in motor vehicles on general sale are realised according to two different types. Based upon known solutions the driving-wheel is connected to the engine by means of a fork hinged on the same axis of the exit shaft of the engine or else, the preferred solution in the case in which the end transmission is realised through a belt or a chain, on an axis in a position near to that of the exit pinion of the engine, suitably chosen.

Both of these solutions have problems relative to bulk, in the transversal direction in the first case, in the longitudinal direction in the second. In the latter case there is the further drawback due to the fact that, since the centre of rotation of the fork does not coincide with the axis of the pinion of the transmission, during the excursion movement of the suspension of the driving-wheel the distance between the axis of the pinion and the axis of the crown can vary, influencing the functionality of the end transmission.

The solution according to the present invention inserts itself into this context, proposing to provide a structure for the attachment of a driving-wheel to the engine, in particular for motor vehicles, in which it is possible to avoid hinging the connection members between wheel and engine on the same axis of the exit shaft of the engine, at the same time strongly limiting the variation in distance between the axis of the pinion and the axis of the crown of the transmission during the excursion of the rear wheel.

To accomplish the above purposes, it is proposed according to the present invention to realise an attachment structure between driving-wheel and engine in which the fork is replaced by a pair of connection arms, arranged in such a way as to form, together with the joining lines between the attachment points between arms and engine and with the joining lines between the attachment points between arms and structure that supports the wheel, an articulated parallelogram.

Therefore, forming the specific object of the present invention is an attachment structure between driving-wheel and engine, in particular for motor vehicles, in which the connection between engine and wheel is obtained through at least two independent connection elements, preferably two connection arms, a first end of which is hinged on rotation axes distinct from each other and parallel, situated in distinct points of the engine, and a second end of which is hinged on distinct and parallel rotation axes, situated at distinct points of the support structure of the driving-wheel.

The present invention shall now be described for illustrative but not limiting purposes, according to its preferred embodiments, with particular reference to the figures of the attached drawings, in which:
- Figure 1 shows a diagram of the attachment structure between driving-wheel and engine according to the present invention, with engine axis, driven pulley axis and wheel axis aligned with each other,
- Figure 2 shows a diagram of the structure of figure 1 in which the suspension is completely squashed, and
- Figure 3 shows a diagram of the structure of figure 1 in which the suspension is completely released.

With reference to the figures a transmission system is shown in which an axis of a driven pulley does not coincide with a rotation axis of a driving-wheel. In particular, an engine exit axis 1, an axis 2 of the driven pulley and an axis 3 of a driving-wheel 10 are shown. The engine axis 1 is located on the engine (not shown), whereas the axis 2 of the driven pulley and the axis 3 of the driving-wheel 10 are located on the support cast (not shown) of the driving-wheel 10.

The connection between the engine and the driving wheel 10 is realised through an upper connection arm 4 and a lower connection arm 5, said arms being hinged, from the engine side, respectively at a first upper rotation axis 6 and at a first lower rotation axis 7 and, from the wheel side, respectively at a second upper rotation axis 8 and at a second lower rotation axis 9, said second axes being situated on the support structure of the driving-wheel 10.

Between the passage points of the axes 6, 7, 8 and 9 a parallelogram is defined, the sides of which have a constant length, being able, however to vary the size of the corresponding angles.

Moreover, the exit shaft of the engine 1, the first upper rotation axis 6 and the first lower rotation axis 7, all being fixed on the engine, are integral with each other. The same goes for the axis 2 of the driven pulley with regard to the second upper rotation axis 8 and the second lower rotation axis 9, all fixed on the support cast of the driving-wheel 10.

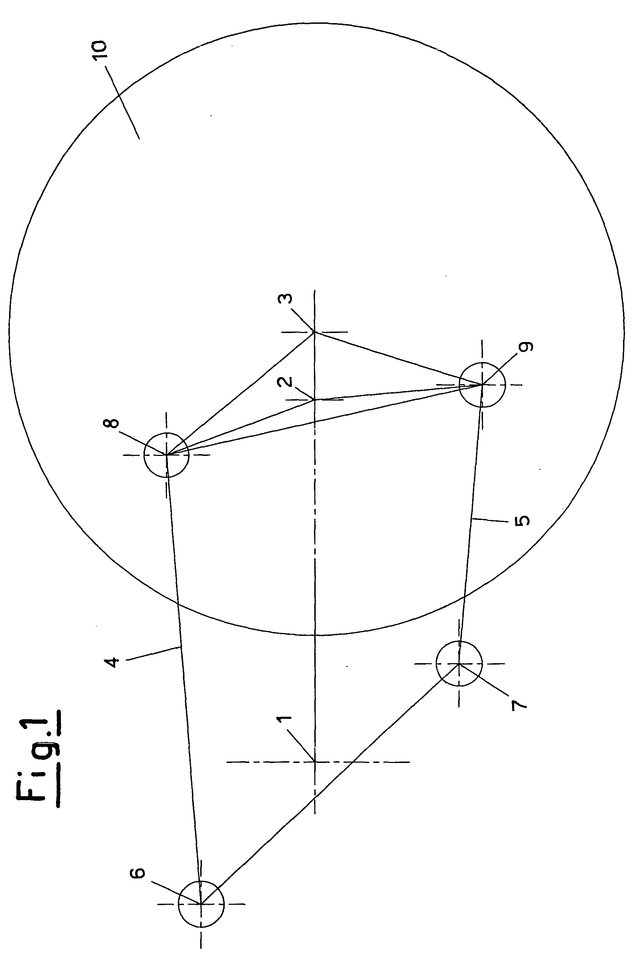

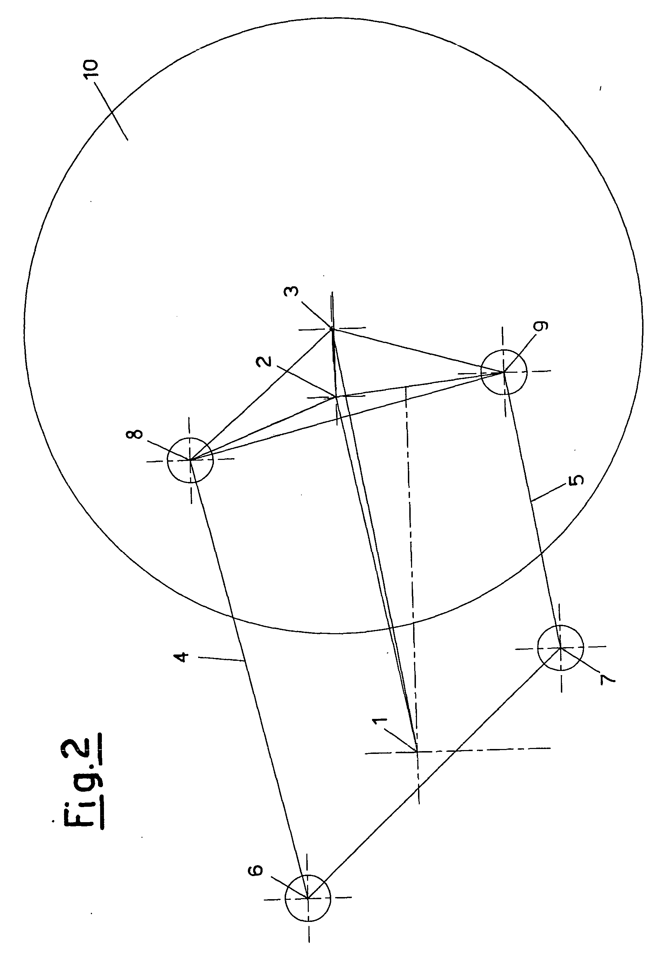

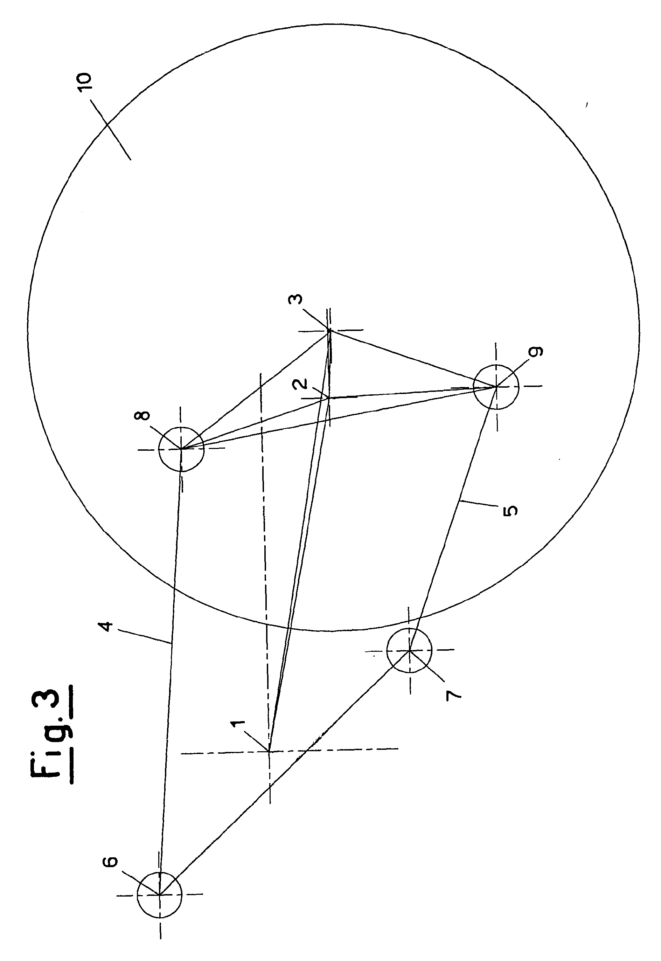

It follows from this that, as can be observed by comparing figures 1, 2 and 3, the distance between the engine axis 1 and the axis 2 of the driven pulley remains constant during the entire excursion movement of the suspension (not shown) of the driving-wheel 10.

It is clear how effective the attachment structure between driving-wheel and engine according to the invention is, which, allowing negligible variations in distance between engine axis 1 and axis of the driven pulley 2, ensures that the transmission belt or chain (not shown) can work optimally, drastically reducing phenomena of traction or loosening due, respectively, to the increase or decrease of this distance.

The present invention has been described for illustrative and not limiting purposes, according to its preferred embodiments, but it should be understood that variations and/or modifications can be made by men skilled in the art without for this reason departing from the relative scope of protection, as defined by the attached claims.

## Claims

1. Attachment structure between driving-wheel and engine, in particular for motor vehicles, **characterised in that** the connection between engine and wheel is obtained through two independent connection elements, a first end of which is hinged on rotation axes distinct from each other and parallel, situated in distinct points of the engine, and a second end of which is hinged on distinct and parallel rotation axes, situated at distinct points of the support structure of the driving-wheel.

2. Attachment structure between driving-wheel and engine according to claim 1, **characterised in that** said connection elements consist of connection arms.

3. Attachment structure between driving-wheel and engine according to either of claims 1 or 2, **characterised in that** the axis of the driven pulley and the axis of the driving-wheel coincide.

4. Attachment structure between driving-wheel and engine according to either of claims 1 or 2, **characterised in that** the axis of the driven pulley and the axis of the driving-wheel are parallel to each other and distinct.
